# EUROPÄISCHE PATENTANMELDUNG

(11) **EP 2 477 301 A1**
(43) Veröffentlichungstag der Anmeldung: **18.07.2012**
(21) Anmeldenummer: 11150695.2
(22) Anmeldetag: 12.01.2011
(51) Int. Cl.: H02J 3/38, F03D 9/00

(54) **Anordnung zur Einspeisung elektrischer Energie in ein Energieversorgungsnetz**

(71) Anmelder: VENPOWER GmbH, 16835 Rüthnick (DE)
(72) Erfinder: Kolb, Stefan, 10317, Berlin (DE); Eichert, Christian, 10405, Berlin (DE)
(74) Vertreter: Fischer, Uwe

(57) **Zusammenfassung**

Die Erfindung bezieht sich auf eine Anordnung (10) zur Einspeisung elektrischer Energie in ein Energieversorgungsnetz (100). Erfindungsgemäß ist vorgesehen, dass die Anordnung einen Generator (20) mit potentialgetrennten Wicklungssystemen (30) aufweist, die Anordnung zumindest zwei Frequenzumrichter (40, 41, 42) mit getrennten Zwischenkreisen (60) aufweist, wobei jeder Frequenzumrichter mittel- oder unmittelbar an ein Wicklungssystem (30) des Generators angeschlossen ist, die Anordnung zumindest eine Steuerungseinrichtung (80) aufweist, an die die Frequenzumrichter zu deren Ansteuerung angeschlossen sind, und die Frequenzumrichter bei Ansteuerung durch die Steuerungseinrichtung Strom mittels einer Spannung mit Multilevelcharackteristik in das Energieversorgungsnetz (100) einspeisen.

## Beschreibung

Die Erfindung bezieht sich auf eine Anordnung mit den Merkmalen gemäß dem Oberbegriff des Patentanspruchs 1.

Eine derartige Anordnung ist aus der internationalen Patentanmeldung WO 2009/003959 A1 bekannt. In dieser Patentanmeldung ist eine Wechselrichteranordnung mit einem Gleichspannungsanschluss, an den eine Gleichspannung anlegbar ist, einem Lastanschluss zum Anschluss einer Last, mehreren parallel geschalteten Wechselrichtern, deren Eingänge gemeinsam mit dem Gleichspannungsanschluss und deren Ausgänge über eine oder mehrere Induktivitäten gemeinsam mit dem Lastanschluss gekoppelt sind, und einer Steuerungseinrichtung zur Steuerung der Wechselrichter in Abhängigkeit eines Vorgabevektors einer übergeordneten Steuerungs- oder Regelungseinheit beschrieben. Die Steuerungseinrichtung ist ausgebildet, die Wechselrichter derart anzusteuern, dass die Ausgangsspannung am Lastanschluss in Abhängigkeit vom Vorgabevektor einer übergeordneten Steuerungs- oder Regelungseinheit einen bestimmten Zustand aus einer Anzahl von unterschiedlichen Zuständen einnimmt, wobei wenigstens einige Zustände der Ausgangsspannung durch eine Anzahl verschiedener Kombinationen von Betriebszuständen der Wechselrichter erzielbar sind und die Steuerungseinrichtung für jeden Zustand der Ausgangsspannung diejenige Kombination von Betriebszuständen der Wechselrichter aus der Anzahl der verschiedenen Kombinationen auswählt, bei welcher ein gewünschtes Kriterium möglichst optimal erfüllt ist. Außerdem ist die Steuerungseinrichtung derart ausgeführt, dass die einzelnen Wechselrichter mit unterschiedlichen Potentialstellbefehlen versorgt werden können um mehr als zwei Level in der Ausgangsspannung zu erzeugen.

Der Erfindung liegt die Aufgabe zugrunde, eine Anordnung zur Einspeisung elektrischer Energie in ein Energieversorgungsnetz anzugeben, wobei die Anordnung bessere elektrische Eigenschaften als vorbekannte Anordnungen dieser Art aufweisen soll.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass die Anordnung einen Generator mit potentialgetrennten Wicklungssystemen aufweist, die Anordnung zumindest zwei Frequenzumrichter mit getrennten Zwischenkreisen aufweist, wobei jeder Frequenzumrichter mittel- oder unmittelbar an ein Wicklungssystem des Generators angeschlossen ist, und die Anordnung zumindest eine Steuerungseinrichtung aufweist, an die die Frequenzumrichter zu deren Ansteuerung angeschlossen sind, wobei die Frequenzumrichter bei Ansteuerung durch die Steuerungseinrichtung den Strom mittels einer Spannung mit Multilevelcharakteristik in das Energieversorgungsnetz einspeisen.

Ein wesentlicher Vorteil der erfindungsgemäßen Anordnung besteht darin, dass die Frequenzumrichter - im Unterschied beispielsweise zu der eingangs beschriebenen, aus der internationalen Patentanmeldung WO 2009/003959 A1 vorbekannten Anordnung - nicht einen gemeinsamen Zwischenkreis als Energiespeicher haben, sondern dass stattdessen jeder Frequenzumrichter seinen eigenen Zwischenkreis besitzt, wobei die Zwischenkreise voneinander potentialmäßig getrennt sind. Durch diese Potentialtrennung lässt sich vermeiden, dass in den Zwischenkreisen sowie in den Frequenzumrichtern unerwünschte Kreisströme auftreten; dennoch bleibt eine Multilevelansteuerung, wie sie bei der eingangs beschriebenen vorbekannten Anordnung erfolgt, möglich.

Potentialmäßig getrennte Zwischenkreise sind beispielsweise solche, die nicht unmittelbar miteinander verbunden sind, und/oder solche, bei denen ohne Schalthandlung der netzseitigen Wechselrichter kein Potentialausgleich zwischen den Zwischenkreisen stattfinden kann.

Die Frequenzumrichter sind auf der Energieversorgungsnetzseite in den einzelnen Phasen vorzugsweise mittelbar parallel geschaltet.

Potentialmäßig getrennte Zwischenkreise können beispielsweise durch potentialmäßig getrennte Generatoren gebildet werden. Alternativ ist es möglich, potentialmäßig getrennte Zwischenkreise durch einen einzigen Generator zu bilden, der potentialmäßig getrennte Wicklungen aufweist. Bei den Zwischenkreisen handelt es sich vorzugsweise um Gleisspannungszwischenkreise.
Gemäß einer besonders vorteilhaften Ausgestaltung ist vorgesehen, dass die zumindest zwei Frequenzumrichter jeweils einen Gleichrichter, einen Gleichspannungszwischenkreis und einen Wechselrichter aufweisen, die Gleichrichter und die Gleichspannungszwischenkreise der zumindest zwei Frequenzumrichter elektrisch voneinander getrennt sind und die Steuerungseinrichtung mit den Wechselrichtern der Frequenzumrichter verbunden ist.

Die Gleichrichter und die Wechselrichter sind vorzugsweise mehrphasige bzw. mehrphasig arbeitende Komponenten, beispielsweise drei- oder vierphasige Komponenten. Unter einem mehrphasigen Gleichrichter ist in diesem Zusammenhang ein Gleichrichter zu verstehen, der eine mehrphasige Wechselspannung (z. B. Drehstromspannung) in eine Gleichspannung umwandeln kann. Unter einem mehrphasigen Wechselrichter ist ein Wechselrichter zu verstehen, der eine Gleichspannung in eine mehrphasige Wechselspannung umwandeln kann.

Die Gleichrichter und die Wechselrichter können die Energie vorzugsweise in beide Richtungen transportieren, also sowohl in Richtung Energieversorgungsnetz als auch umgekehrt. Im letztgenannten Falle arbeiten die Gleichrichter - in Energieflussrichtung gesehen - als Wechselrichter und die Wechselrichter als Gleichrichter.

Die Wechselrichter und die im Falle einer inversen Energieflussrichtung als Wechselrichter arbeitenden Gleichrichter sind vorzugsweise derart ausgestaltet, dass sie die Phasenlage zwischen der ausgangsseitig erzeugten Spannung und dem ausgangsseitig gelieferten Strom beliebig, zumindest nahezu beliebig einstellen können. Hierzu weisen die Komponenten vorzugsweise entsprechende Steuersignaleingänge zum Einstellen der Phasenlage auf.

Die Gleichrichter und/oder die Wechselrichter können aktive Komponenten enthalten, beispielsweise Halbleiterschalter, oder alternativ auch passiv arbeiten (z. B. mittels Dioden).

Die Steuerungseinrichtung kann einem Frequenzumrichter zugeordnet sein; alternativ, und dies wird als vorteilhaft angesehen, kann die Steuerungseinrichtung auf mehrere (zumindest zwei) oder alle Frequenzumrichter verteilt sein.

Auch wird es als vorteilhaft angesehen, wenn die Steuerungseinrichtung derart ausgestaltet ist, dass sie die Frequenzumrichter mit individuellen pulsweitenmodulierten Steuersignalen ansteuert.

Vorzugsweise ist die Steuerungseinrichtung derart ausgestaltet, dass sie Steuersignale für die Frequenzumrichter mit einem Raumzeigerverfahren erzeugt.

Auch wird es als vorteilhaft angesehen, wenn die Steuerungseinrichtung derart ausgestaltet ist, dass sie Steuersignale für die Frequenzumrichter mit einem trägerbasierten Verfahren erzeugt. Vorzugsweise wird die Steuerungseinrichtung die Steuersignale für die Frequenzumrichter derart erzeugen, dass die Trägersignale zur Erzeugung der Multilevelspannung keine Phasenverschiebung aufweisen.

Auch kann die Steuerungseinrichtung derart ausgestaltet sein, dass sie Steuersignale für die Frequenzumrichter mit einem Sinus-Dreieck-Verfahren erzeugt.

Die Frequenzumrichter sind vorzugsweise netzseitig induktiv entkoppelt. Die Frequenzumrichter können netzseitig beispielsweise mit Drosseln verbunden sein.

Auch können die Frequenzumrichter netzseitig beispielsweise an einen Netztransformator angeschlossen werden, der zumindest zwei voneinander potentialgetrennte sekundärseitige Wicklungssysteme besitzt, wobei die mindestens zwei Frequenzumrichter an verschiedene der zumindest zwei voneinander potentialgetrennten sekundärseitigen Wicklungssysteme angeschlossen werden.

Die Steuerungseinrichtung ist vorzugsweise darüber hinaus derart ausgestaltet, dass sie die in den Frequenzumrichtern auftretenden elektrischen Verluste gleich, zumindest annähernd gleich, auf die Frequenzumrichter aufteilt.

Auch kann die Steuerungseinrichtung derart ausgestaltet sein, dass sie Kreisströme, die trotz Potentialtrennung zwischen den Frequenzumrichtern auftreten, gezielt regelt.

Die Anordnung bildet vorzugsweise eine Wind- oder Wasserenergieanlage zum Erzeugen elektrischer Energie und weist vorzugsweise mindestens einen Propeller auf, der mit dem Generator in Verbindung steht.

Der Generator kann beispielsweise einen Rotor und einen Stator umfassen, wobei der Stator mindestens zwei elektrisch voneinander unabhängige Statormodule aufweist, die jeweils mit dem Rotor zusammenwirken, wobei jedes der Statormodule jeweils mindestens einen moduleigenen Magneten und mindestens eine Wicklung, die von zumindest einem Teil des magnetischen Flusses des Magneten durchflossen wird, umfasst und jedes der Statormodule mit dem Rotor jeweils einen moduleigenen Magnetkreis bildet, wobei im Falle einer Relativbewegung zwischen Rotor und Stator jedes Statormodul eine moduleigene Ausgangsspannung erzeugt, wobei die Wicklungen der Statormodule potentialfrei und voneinander potentialgetrennt sind und wobei die zumindest zwei Frequenzumrichter generatorseitig mittelbar oder unmittelbar an die potentialfreien und voneinander potentialgetrennten Wicklungen der Statormodule angeschlossen sind.

Im Übrigen wird es als vorteilhaft angesehen, wenn alle Frequenzumrichter bzw. die in den Frequenzumrichtern enthaltenen Schalter möglichst gleichmäßig elektrisch belastet werden. Handelt es sich um identische Schalter innerhalb der Frequenzumrichter, so sollten diese im zeitlichen Mittel gleichbetrieben werden. Handelt es sich um unterschiedlich belastbare Schalter innerhalb der Frequenzumrichter, so sollte die Lastverteilung unter Berücksichtigung der individuellen Belastbarkeit optimiert werden.

Im Übrigen ist es auch möglich, die Temperatur der Schalter innerhalb der Frequenzumrichter zu messen und den Betrieb der Schalter dahingehend zu optimieren, dass von der Steuerungseinrichtung alle Schalter mit möglichst gleicher Betriebstemperatur betrieben werden.

Die oben beschriebenen Anordnungen ermöglichen es, eine Vielzahl an Frequenzumrichtern vorzusehen, um ausgangsseitig eine Vielzahl unterschiedlicher Spannungslevel zu erzeugen. Je mehr Spannungslevel zur Verfügung stehen, umso besser lässt sich das Ausgangssignal der Frequenzumrichter an einen sinusförmigen Verlauf mit beispielsweise 50 Hz oder 60 Hz Grundfrequenz anpassen. Dies soll nachfolgend kurz verdeutlicht werden: Werden zwei Frequenzumrichter verwendet und werden die Frequenzumrichter beispielsweise mit einer Schaltfrequenz von einem 1 kHz betrieben, so wird eine Störfrequenz bei 2 kHz erzeugt werden, die mittels nachgeordneter Filter weggefiltert werden muss. Werden hingegen mehr als zwei Frequenzumrichter eingesetzt, so verschiebt sich die Störfrequenz zu einem Vielfachen der Schaltfrequenz von einem 1 kHz. Werden beispielsweise 6 Frequenzumrichter eingesetzt, so liegt die Störfrequenz bei ca. 6 kHz; durch das Ansteigen der Störfrequenz wird das Wegfiltern vereinfacht, und es können kleinere und billigere Filter eingesetzt werden. Mit anderen Worten besteht ein interessanter Aspekt der oben beschriebenen Anordnungen also darin, dass durch den Einsatz mehrerer Frequenzumrichter die Störfrequenzen zu höheren Frequenzen hin verschoben werden können, um den Einsatz einfacherer und billigerer Filter zu ermöglichen.

Als vorteilhaft wird demgemäß auch eine Anordnung mit einer Steuerungseinrichtung angesehen, die zur Durchführung eines Multilevelmodulationsverfahrens geeignet ist, wobei die Anordnung zumindest zwei Frequenzumrichter und einen Generator mit Wicklungen aufweist, die Steuerungseinrichtung an die Frequenzumrichter zu deren Ansteuerung angeschlossen ist, die Frequenzumrichter ausgangsseitig derart miteinander verschaltet sind, dass sie bei Ansteuerung durch die Steuerungseinrichtung ausgangsseitig eine in ein Energieversorgungssystem einspeisbare Multilevelausgangsspannung erzeugen, und die Frequenzumrichter eingangsseitig elektrisch voneinander getrennt sind und von Wicklungen des Generators gespeist werden, die potentialfrei und voneinander potentialgetrennt sind.

Die Erfindung wird nachfolgend anhand von Ausführungsbeispielen näher erläutert; dabei zeigen beispielhaft
- Figur 1: ein erstes Ausführungsbeispiel für eine erfindungsgemäße Anordnung mit einem Generator und Drosseln,
- Figur 2: ein zweites Ausführungsbeispiel für eine erfindungsgemäße Anordnung mit einem meh- rere Generatoreinheiten aufweisenden Generator und Drosseln,
- Figur 3: ein drittes Ausführungsbeispiel für eine erfindungsgemäße Anordnung mit einem Generator und einem Netztransformator, der mehrere voneinander potentialgetrennte sekundärseitige Wicklungssysteme besitzt, und
- Figur 4: ein viertes Ausführungsbeispiel für eine erfindungsgemäße Anordnung mit einem mehrere Generatoreinheiten aufweisenden Generator und einem Netztransformator, der mehrere voneinander potentialgetrennte sekundärseitige Wicklungssysteme besitzt.

In den Figuren werden der Übersicht halber für identische oder vergleichbare Komponenten stets dieselben Bezugszeichen verwendet.

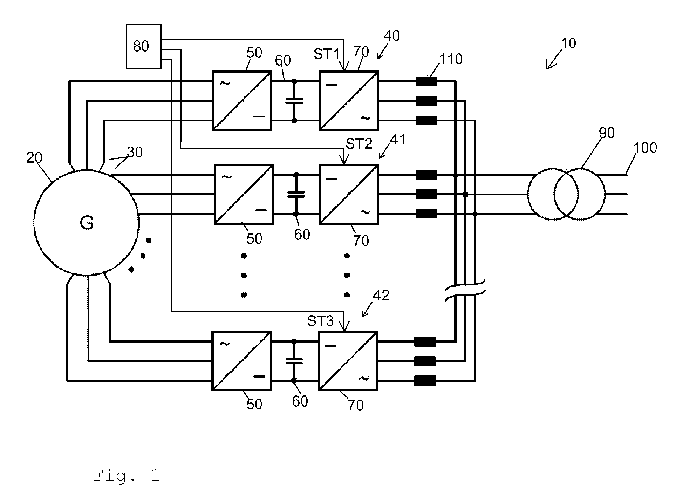

In der Figur 1 erkennt man eine Anordnung 10 mit einem Generator 20, der eine Vielzahl an potentialgetrennten Wicklungssystemen 30 aufweist. An jedes dieser Wicklungssysteme 30 ist jeweils mittel- oder unmittelbar ein Frequenzumrichter 40, 41, und 42 angeschlossen.

Die Frequenzumrichter 40, 41, und 42 umfassen jeweils einen Gleichrichter 50, einen Gleichspannungszwischenkreis 60 und einen Wechselrichter 70. Die Gleichrichter 50 und die Gleichspannungszwischenkreise 60 der Frequenzumrichter sind elektrisch voneinander getrennt.

In der Figur 1 lässt sich außerdem erkennen, dass die Frequenzumrichter auf der Energieversorgungsnetzseite in den einzelnen Phasen mittelbar parallel geschaltet sind.

An die Wechselrichter 70 der Frequenzumrichter 40, 41 und 42 ist eine Steuerungseinrichtung 80 angeschlossen, die die Wechselrichter 70 mit individuellen Steuersignalen ST1 bis ST3 ansteuert. Die Ansteuerung durch die Steuersignale ST1 bis ST3 führt dazu, dass die Wechselrichter 70 gemeinsam eine Spannung mit Multilevelcharakteristik erzeugen und diese in den Transformator 90 und damit in das nachgeordnete Energieversorgungsnetz 100 einspeisen.

Die Steuerungseinrichtung 80 wird die Wechselrichter 70 vorzugsweise mit individuellen pulsweitenmodulierten Steuersignalen ST ansteuern; die Steuersignale ST1 bis ST3 kann die Steuerungseinrichtung 80 beispielsweise nach einem Raumzeigerverfahren oder einem Sinus-Dreieck-Verfahren erzeugen (vgl. internationale Patentanmeldung WO 2009/003959 A1). Vorzugsweise wird die Steuerungseinrichtung 80 die Steuersignale mit einem trägerbasierten Verfahren erzeugen, wobei die mit dem trägerbasierten Verfahren erzeugten Trägersignale zwecks Erzeugung der Multilevelspannung vorzugsweise phasenverschiebungsfrei sind.

Bei dem Ausführungsbeispiel gemäß der Figur 1 sind die Frequenzumrichter 40, 41 und 42 netzseitig mit Drosseln 110 verbunden und dadurch induktiv entkoppelt. Die Drosseln 110 sind elektrisch zwischen die Frequenzumrichter 40, 41 und 42 und den Transformator 90 geschaltet.

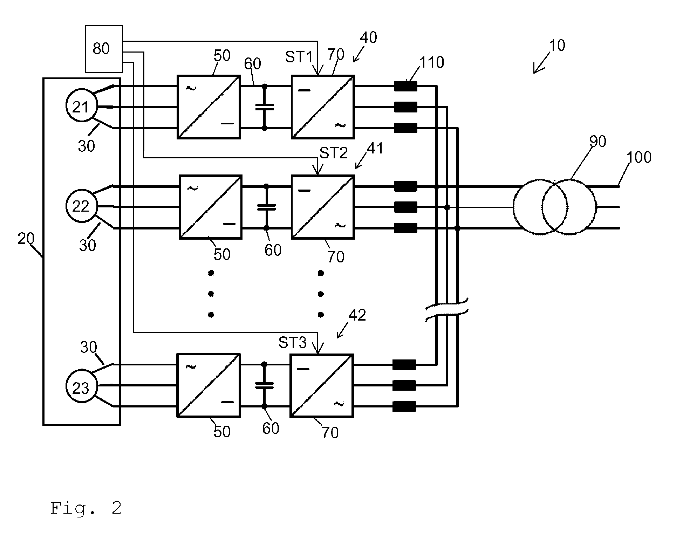

Die Figur 2 zeigt ein zweites Ausführungsbeispiel für eine Anordnung 10 zur Einspeisung elektrischer Energie in das Energieversorgungsnetz 100. Bei diesem zweiten Ausführungsbeispiel ist der Generator 20 durch eine Vielzahl an vorzugsweise selbstständigen Generatoreinheiten 21, 22 und 23 gebildet, die voneinander potentialgetrennte Wicklungssysteme 30 aufweisen. Im Übrigen entspricht das zweite Ausführungsbeispiel dem ersten Ausführungsbeispiel.

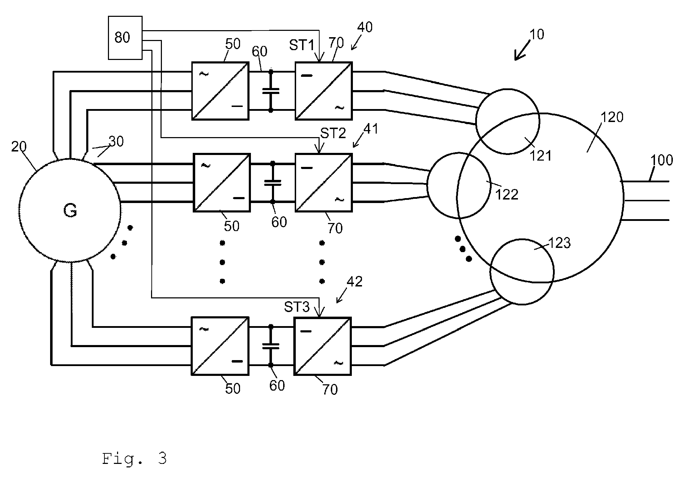

Die Figur 3 zeigt ein drittes Ausführungsbeispiel für eine Anordnung 10 zur Einspeisung elektrischer Energie in das Energieversorgungsnetz 100. Bei diesem dritten Ausführungsbeispiel ist zur induktiven Entkopplung anstelle der Drosseln 110 (vgl. Figuren 1 und 2) ein Netztransformator 120 vorgesehen. Der Netztransformator 120 weist eine Vielzahl an zueinander potentialgetrennten sekundärseitigen Wicklungssystemen 121, 122 und 123 auf. Die Frequenzumrichter 40, 41 und 42 sind zur induktiven Entkopplung dabei jeweils an ein individuelles sekundärseitiges Wicklungssystem 121, 122 und 123 angeschlossen. Im Übrigen entspricht das dritte Ausführungsbeispiel dem ersten Ausführungsbeispiel.

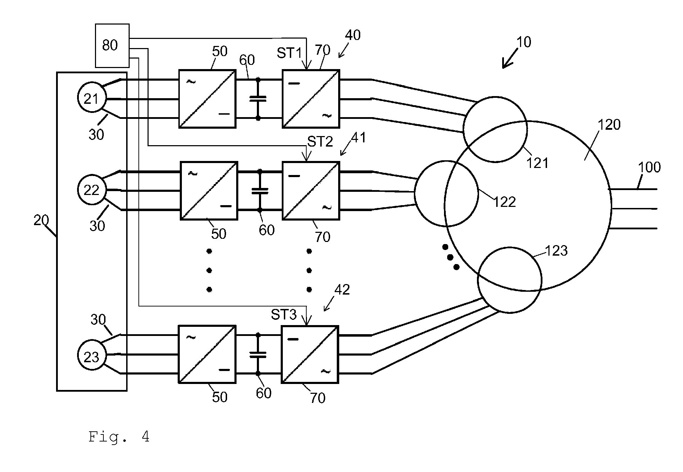

Die Figur 4 zeigt ein viertes Ausführungsbeispiel für eine Anordnung 10 zur Einspeisung elektrischer Energie in das Energieversorgungsnetz 100. Bei diesem vierten Ausführungsbeispiel ist zur induktiven Entkopplung anstelle der Drosseln 110 (vgl. Figuren 1 und 2) ein Netztransformator 120 vorgesehen, wie er im Zusammenhang mit der Figur 3 beschrieben worden ist. Der Generator 20 ist durch eine Vielzahl an vorzugsweise selbstständigen Generatoreinheiten 21, 22 und 23 gebildet, wie sie im Zusammenhang mit der Figur 2 beschrieben worden sind. Im Übrigen entspricht das vierte Ausführungsbeispiel dem ersten Ausführungsbeispiel.

### Bezugszeichen

- 10: Anordnung
- 20: Generator
- 30: potentialgetrennte Wicklungssysteme
- 40: Frequenzumrichter
- 41: Frequenzumrichter
- 42: Frequenzumrichter
- 50: Gleichrichter
- 60: Gleichspannungszwischenkreis
- 70: Wechselrichter
- 80: Steuerungseinrichtung
- 90: Transformator
- 100: Energieversorgungsnetz
- 110: Drossel
- 120: Netztransformator
- 121: potentialgetrenntes, sekundärseitiges Wicklungssystem
- 122: potentialgetrenntes, sekundärseitiges Wicklungssystem
- 123: potentialgetrenntes, sekundärseitiges Wicklungssystem

- ST1: Steuersignal
- ST2: Steuersignal
- ST3: Steuersignal

## Patentansprüche

1. Anordnung (10) zur Einspeisung elektrischer Energie in ein Energieversorgungsnetz (100),
**dadurch gekennzeichnet, dass**
- die Anordnung einen Generator (20) mit potentialgetrennten Wicklungssystemen (30) aufweist,
- die Anordnung zumindest zwei Frequenzumrichter (40, 41, 42) mit getrennten Zwischenkreisen (60) aufweist, wobei jeder Frequenzumrichter mittel- oder unmittelbar an ein Wicklungssystem (30) des Generators angeschlossen ist,
- die Anordnung zumindest eine Steuerungseinrichtung (80) aufweist, an die die Frequenzumrichter zu deren Ansteuerung angeschlossen sind, und
- die Frequenzumrichter bei Ansteuerung durch die Steuerungseinrichtung Strom mittels einer Spannung mit Multilevelcharackteristik in das Energieversorgungsnetz (100) einspeisen.

2. Anordnung nach Anspruch 1,
**dadurch gekennzeichnet, dass**
- die zumindest zwei Frequenzumrichter jeweils einen Gleichrichter (50), einen Gleichspannungszwischenkreis (60) und einen Wechselrichter (70) aufweisen,
- die Gleichrichter und die Gleichspannungszwischenkreise der zumindest zwei Frequenzumrichter elektrisch voneinander getrennt sind und
- die Steuerungseinrichtung mit den Wechselrichtern der Frequenzumrichter verbunden ist.

3. Anordnung nach einem der voranstehenden Ansprüche, **dadurch gekennzeichnet, dass** die Steuerungseinrichtung auf die zumindest zwei Frequenzumrichter verteilt ist.

4. Anordnung nach einem der voranstehenden Ansprüche, **dadurch gekennzeichnet, dass**
die Steuerungseinrichtung derart ausgestaltet ist, dass sie die Frequenzumrichter mit individuellen pulsweitenmodulierten Steuersignalen ansteuert.

5. Anordnung nach einem der voranstehenden Ansprüche, **dadurch gekennzeichnet, dass**
die Steuerungseinrichtung derart ausgestaltet ist, dass sie Steuersignale für die Frequenzumrichter mit einem Raumzeigerverfahren erzeugt.

6. Anordnung nach einem der voranstehenden Ansprüche 1-4, **dadurch gekennzeichnet, dass**
die Steuerungseinrichtung derart ausgestaltet ist, dass sie Steuersignale für die Frequenzumrichter mit einem trägerbasierten Verfahren erzeugt.

7. Anordnung nach Anspruch 6, **dadurch gekennzeichnet, dass** die Steuerungseinrichtung derart ausgeführt ist, dass sie mit dem trägerbasierten Verfahren Trägersignale erzeugt, die zur Erzeugung der Multilevelspannung keine Phasenverschiebung aufweisen.

8. Anordnung nach einem der voranstehenden Ansprüche 1, 2, 3, 4, oder 7,
**dadurch gekennzeichnet, dass**
die Steuerungseinrichtung derart ausgestaltet ist, dass sie Steuersignale für die Frequenzumrichter mit einem Sinus-Dreieck-Verfahren erzeugt.

9. Anordnung nach einem der voranstehenden Ansprüche,
**dadurch gekennzeichnet, dass**
die Frequenzumrichter netzseitig induktiv entkoppelt sind.

10. Anordnung nach einem der voranstehenden Ansprüche, **dadurch gekennzeichnet, dass**
die Frequenzumrichter netzseitig mit Drosseln (110) verbunden sind.

11. Anordnung nach einem der voranstehenden Ansprüche, **dadurch gekennzeichnet, dass**
die Frequenzumrichter netzseitig an einen Netztransformator (120) angeschlossen sind, der zumindest zwei voneinander potentialgetrennte sekundärseitige Wicklungssysteme (121, 122, 123) besitzt, wobei die mindestens zwei Frequenzumrichter an verschiedene der zumindest zwei voneinander potentialgetrennten sekundärseitigen Wicklungssysteme angeschlossen sind.

12. Anordnung nach einem der voranstehenden Ansprüche, **dadurch gekennzeichnet dass**
die Steuerungseinrichtung derart ausgestaltet ist, dass sie die in den Frequenzumrichtern auftretenden elektrischen Verluste gleich, zumindest annähernd gleich, auf die Frequenzumrichter aufteilt.

13. Anordnung nach einem der voranstehenden Ansprüche, **dadurch gekennzeichnet, dass**
die Steuerungseinrichtung derart ausgestaltet ist, dass sie die Kreisströme, die zwischen den Frequenzumrichtern auftreten, regelt.

14. Anordnung nach einem der voranstehenden Ansprüche, **dadurch gekennzeichnet dass**
die Anordnung eine Wind- oder Wasserenergieanlage zum Erzeugen elektrischer Energie bildet und mindestens einen Propeller aufweist, der mit dem Generator in Verbindung steht.

15. Anordnung nach einem der voranstehenden Ansprüche, **dadurch gekennzeichnet dass**
der Generator einen Rotor und einen Stator umfasst,
- wobei der Stator mindestens zwei elektrisch voneinander unabhängige Statormodule aufweist, die jeweils mit dem Rotor zusammenwirken,
- wobei jedes der Statormodule jeweils mindestens einen moduleigenen Magneten und mindestens eine Wicklung, die von zumindest einem Teil des magnetischen Flusses des Magneten durchflossen wird, umfasst und jedes der Statormodule mit dem Rotor jeweils einen moduleigenen Magnetkreis bildet,
- wobei im Falle einer Relativbewegung zwischen Rotor und Stator jedes Statormodul eine moduleigene Ausgangsspannung erzeugt,
- wobei die Wicklungen der Statormodule potentialfrei und voneinander potentialgetrennt sind und
- wobei die zumindest zwei Frequenzumrichter generatorseitig mittelbar oder unmittelbar an die potentialfreien und voneinander potentialgetrennten Wicklungen der Statormodule angeschlossen sind.
